# FASCICULE DE BREVET EUROPEEN

(11) **EP 3 441 826 B1**
(45) Date de publication et mention de la délivrance du brevet: **03.06.2020**
(21) Numéro de dépôt: 17185561.2
(22) Date de dépôt: 09.08.2017
(51) Int. Cl.: G04B 47/06, C09K 5/00, C09K 9/00, G03C 1/00, G03C 1/73, C09D 5/22, C09D 5/26, C09K 11/00, C09K 11/02

(54) **CAPSULE LIQUIDE A PROPRIETES THERMOCHROMIQUE ET PHOTOCHROMIQUE**
FLÜSSIGE KAPSEL MIT THERMOCHROMEN UND FOTOCHROMEN EIGENSCHAFTEN
LIQUID CAPSULE WITH THERMOCHROMIC AND PHOTOCHROMIC PROPERTIES

(43) Date de publication de la demande: 13.02.2019
(73) Titulaire: The Swatch Group Research and Development Ltd, 2074 Marin (CH)
(72) Inventeur: FRANCOIS, Nicolas, 2000 Neuchâtel (CH)
(74) Mandataire: ICB SA

(56) Documents cités:
- EP-A1- 3 172 982
- ES-A1- 2 645 297
- GB-A- 2 431 159
- JP-A- H0 561 132
- US-A1- 2017 189 880

## Description

### Domaine de l'invention

L'invention se rapporte aux composants thermochromiques et aux composants photochromiques, en particulier appliqués au domaine de l'horlogerie.

### Arrière-plan de l'invention

On connaît les capsules thermochromiques, qui changent de couleur de manière réversible lorsque la température s'élève ou s'abaisse au-delà d'une valeur seuil. Le document de brevet EP 0 602 537 A1 décrit notamment une montre munie d'un dispositif indicateur de températures réalisé à base de telles capsules. La montre permet d'indiquer la température du milieu dans laquelle elle se trouve, indépendamment du fait que la montre soir portée ou non portée.

On connaît également les capsules photochromiques, qui changent de couleur de manière réversible en réaction à une exposition de rayons lumineux. Le document de brevet CH 710 489 décrit notamment une montre munie d'une lunette comprenant des indicateurs réalisés à base de telles capsules

Il serait cependant avantageux de disposer de capsules pouvant avoir à la fois des propriétés thermochromiques et photochromiques, telles que divulguées dans le document JPH0561132 présentant une capsule renfermant des particules thermochromiques et possédant un revêtement comprenant des particules photochromiques.

### Résumé de l'invention

Le but de la présente invention est donc de proposer une capsule présentant des propriétés thermochromiques et des propriétés photochromiques.

A cet effet, l'invention se rapporte à une capsule telle que définie dans la revendication 1.

Dans la première plage de températures, les particules thermochromiques et les particules photochromiques sont telles que leurs densités sont inférieures à la densité du liquide. Ainsi elles sont en suspension dans le liquide. Puisque les particules thermochromiques sont plus volumineuses que les particules photochromiques, l'effet prédominant dans la capsule est le thermochromisme.

Dans la deuxième plage de température, plus élevée que la première, le liquide a une densité plus faible que dans la première plage. Les particules thermochromiques sont telles que leur densité est supérieure à la densité du liquide, alors que les particules photochromiques sont telles que leur densité est inférieure à la densité du liquide. Ainsi les particules thermochromiques coulent alors que les particules thermochromiques restent en suspens : l'effet prédominant dans la capsule est donc le photochromisme.

D'autres caractéristiques avantageuses de l'invention sont données dans les revendications 2 à 7. Ces caractéristiques peuvent être considérées indépendamment ou selon toutes combinaisons techniquement possibles.

### Description sommaire des figures

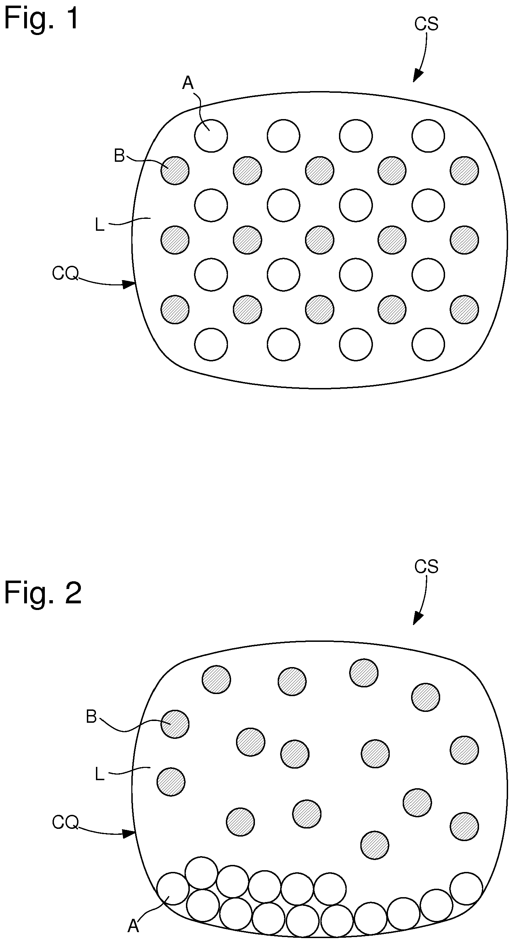

D'autres particularités et avantages ressortiront clairement de la description qui en est faite ci-après, à titre indicatif et nullement limitatif, en référence aux figures annexées, représentant :
- A la figure 1, une capsule selon un mode de réalisation de l'invention, lorsque sa température se situe dans une première plage de températures
- A la figure 2, la capsule de la figure 1, lorsque sa température se situe dans une deuxième plage de températures plus élevées.

### Description détaillée des modes de réalisation préférés

La figure 1 représente une capsule comportant une coque étanche transparente. La coque renferme un liquide transparent ne faisant pas barrière aux rayons ultraviolets, thermoconducteur et ayant une forte dilatation thermique à une température préférée, que nous noterons Tx. Il peut par exemple s'agir d'un mélange huileux entre une paraffine liquide ayant une température de fusion Tx et de la glycérine. La coque renferme également deux types de particules. Les premières particules sont revêtues d'un revêtement thermochromique, on les appellera particules thermochromiques. Les deuxièmes particules sont revêtues d'un revêtement photochromique, on les appellera particules photochromiques. Ces particules se présentent sous la forme de sphères et peuvent donc plus facilement couler (contrairement aux particules en forme de lamelle). Les revêtements thermochromiques et photochromiques sont choisis de sorte à résister au milieu huileux. Ils sont également sélectionnés de sorte à avoir un seuil de transition coloré permettant de donner une information intéressante, notamment à un porteur d'une pièce d'horlogerie ou de joaillerie, dans le cas où la capsule est placée sur une paroi de ladite pièce. Cette information peut être une température, une intensité lumineuse, un taux d'ultraviolets dangereux pour la santé, etc.

Les particules thermochromiques et les particules photochromiques ont par exemple un diamètre compris entre 100 à 500 microns. De plus, le volume des particules thermochromiques est plus important que le volume des particules photochromiques. Enfin, la densité des particules thermochromiques est plus élevée que la densité des particules photochromiques.

Dans une première plage de températures, par exemple entre 0 et 10 degrés Celsius, la densité du liquide est supérieure à la densité des particules thermochromiques et à la densité des particules photochromiques. Ainsi, les particules thermochromiques et les particules photochromiques sont en suspension dans le liquide. Toutefois, les particules photochromiques sont masquées par les particules thermochromiques qui ont un plus gros volume et par conséquent un pouvoir chromatique plus grand. Ainsi, l'effet esthétique dominant dans la capsule est le thermochromisme.

Dans une deuxième plage de températures comprenant des températures plus élevées que celles de la première plage, par exemple de 10 à 30 degrés Celsius, le liquide a une densité inférieure à celle qu'il avait dans la première plage de températures. La densité du liquide est telle qu'elle est supérieure à la densité des particules photochromiques, mais inférieure à la densité des particules thermochromiques. Ainsi, les particules thermochromiques, plus denses, sédimentent, c'est-à-dire coulent et se déposent au fond de la coque. Au contraire, les particules photochromiques restent en suspens. L'effet esthétique dominant dans la capsule est donc le photochromisme.

On note que dans un mode de réalisation, la coque contient en outre un troisième type de particules, des particules photoluminescentes, permettant de voir les transitions colorées de nuit.

Bien entendu, la présente invention ne se limite pas à l'exemple illustré mais est susceptible de diverses variantes et modifications qui apparaîtront à l'homme de l'art.

## Revendications

1. Capsule (CS) comprenant une coque (CQ) contenant un liquide (L) transparent et thermoconducteur, des particules (A) dotées d'un revêtement thermochromique et des particules (B) dotées d'un revêtement photochromique, **caractérisé en ce que** lesdites particules thermochromiques (A) sont plus volumineuses que lesdites particules photochromiques (B), le liquide (L) étant tel que dans une première plage de températures, sa densité est supérieure à la densité des particules thermochromiques (A) et à la densité des particules photochromiques (B), et tel que dans une deuxième plage de températures supérieures à celles de la première plage, la densité des particules photochromiques (B) est inférieure à la densité du liquide (L) qui est elle-même inférieure à la densité des particules thermochromiques (A).

2. Capsule (CS) selon la revendication précédente, le liquide (L) étant un mélange huileux laissant passer les rayons ultraviolets.

3. Capsule (CS) selon la revendication précédente, le liquide (L) comprenant de la paraffine liquide et de la glycérine.

4. Capsule (CS) selon l'une des revendications précédentes, les particules thermochromiques (A) et photochromiques (B) étant de forme sphérique.

5. Capsule (CS) selon la revendication précédente, les particules thermochromiques (A) et photochromiques (B) ayant un diamètre compris entre 100 et 500 microns.

6. Capsule (CS) selon l'une des revendications précédentes, la coque (CQ) comprenant en outre des particules photoluminescentes.

7. Pièce d'horlogerie ou de joaillerie comprenant une paroi comprenant un revêtement constitué de capsules (CS) selon l'une des revendications précédentes.

## Patentansprüche

1. Kapsel (CS) mit einer Schale (CQ), die eine transparente und wärmeleitende Flüssigkeit (L), mit einer thermochromen Beschichtung versehene Partikel (A), und mit einer photochromen Beschichtung versehene Partikel (B) enthält, **dadurch gekennzeichnet, dass** die thermochromen Partikel (A) voluminöser sind als die photochromen Partikel (B), wobei die Flüssigkeit (L) so beschaffen ist, dass ihre Dichte in einem ersten Temperaturbereich höher ist als die Dichte der thermochromen Partikel (A) und die Dichte der photochromen Partikel (B), und so, dass in einem zweiten Temperaturbereich, der höher ist als der erste Bereich, die Dichte der photochromen Partikel (B) niedriger ist als die Dichte der Flüssigkeit (L), die ihrerseits niedriger ist als die Dichte der thermochromen Partikel (A).

2. Kapsel (CS) nach dem vorstehenden Anspruch, wobei die Flüssigkeit (L) eine ölige Mischung ist, die ultraviolette Strahlen durchlässt.

3. Kapsel (CS) nach dem vorstehenden Anspruch, wobei die Flüssigkeit (L) flüssiges Paraffin und Glyzerin enthält.

4. Kapsel (CS) nach einem der vorstehenden Ansprüche, wobei die thermochromen (A) und photochromen (B) Partikel kugelförmig sind.

5. Kapsel (CS) nach dem vorstehenden Anspruch, wobei die thermochromen (A) und photochromen (B) Partikel einen Durchmesser von 100 bis 500 Mikron aufweisen.

6. Kapsel (CS) nach einem der vorstehenden Ansprüche, wobei die Schale (CQ) ferner photolumineszierende Partikel enthält.

7. Uhr oder Schmuckstück mit einer Wand, die eine Beschichtung bestehend aus Kapseln (CS) nach einem der vorstehenden Ansprüche aufweist.

## Claims

1. Capsule (CS) comprising a shell (CQ) containing a transparent and thermally conducting liquid (L), particles (A) having a thermochromic coating and particles (B) having a photochromic coating, **characterized in that** said thermochromic particles (A) are bulkier than said photochromic particles (B), the liquid (L) being such that, within a first range of temperatures, its density is greater than the density of the thermochromic particles (A) and than the density of the photochromic particles (B), and such that, within a second range of temperatures greater than those of the first range, the density of the photochromic particles (B) is less than the density of the liquid (L), which is itself less than the density of the thermochromic particles (A).

2. Capsule (CS) according to the preceding claim, the liquid (L) being an oily mixture letting the ultraviolet rays pass.

3. Capsule (CS) according to the preceding claim, the liquid (L) comprising liquid paraffin and glycerol.

4. Capsule (CS) according to one of the preceding claims, the thermochromic particles (A) and the photochromic particles (B) being of spherical shape.

5. Capsule (CS) according to the preceding claim, the thermochromic particles (A) and the photochromic particles (B) having a diameter of between 100 and 500 microns.

6. Capsule (CS) according to one of the preceding claims, the shell (CQ) additionally comprising photoluminescent particles.

7. Timepiece or item of jewellery comprising a wall comprising a coating consisting of capsules (CS) according to one of the preceding claims.
